(19) Europäisches Patentamt
European Patent Office
Office européen des brevets

(11) **EP 4 462 692 A1**

(12) **EUROPEAN PATENT APPLICATION**
published in accordance with Art. 153(4) EPC

(43) Date of publication:
**13.11.2024 Bulletin 2024/46**

(21) Application number: **22917759.7**

(22) Date of filing: **05.01.2022**

(51) International Patent Classification (IPC):
**H04B 7/02** (2018.01)

(52) Cooperative Patent Classification (CPC):
**H04B 7/02**

(86) International application number:
**PCT/CN2022/070401**

(87) International publication number:
**WO 2023/130283 (13.07.2023 Gazette 2023/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **CHI, Liangang
Beijing 100085 (CN)**
• **DUAN, Gaoming
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **MAPPING MODE DETERMINATION METHOD/APPARATUS/DEVICE AND STORAGE MEDIUM**

(57) The present disclosure belongs to the technical field of communications. Provided are a mapping mode determination method/apparatus/device and a storage medium. The method comprises: first determining a mapping mode of each code word and an orbital angular momentum (OAM) mode within each transmission time; and then transmitting each code word within each transmission time on the basis of the mapping mode. By means of the method provided in the present disclosure, a mapping mode can be determined, such that it can be ensured that transmission resources are utilized to the maximum extent.

EP 4 462 692 A1

```
┌─────────────────────────────────────────┐
│ determining a mapping mode between at    │──── 101
│ least one codeword within at least one   │
│ transmission period and an OAM modality  │
└─────────────────────────────────────────┘
                    │
                    ▼
┌─────────────────────────────────────────┐
│ transmitting the at least one codeword   │──── 102
│ within the at least one transmission     │
│ period based on the mapping mode         │
└─────────────────────────────────────────┘
```

FIG. 1

## Description

## TECHNICAL FIELD

The disclosure relates to the field of communication technologies, more particularly, to a mapping mode determination method/apparatus/device and a storage medium.

## BACKGROUND

In communication systems, an orbital angular momentum (OAM) based communication system is able to realize multimodal transmission under a line of sight (LOS) path, and thus is widely used.

The multimodal transmission is accompanied by multi-codeword transmission, and a mapping from codewords to OAM modalities is a key to the transmission. Therefore, there is an urgent need for a "method for determining a mapping between codewords and OAM modalities" to ensure transmission speed and service requirements.

## SUMMARY

The disclosure provides a mapping mode determination method/apparatus/device and a storage medium.

Embodiments of a first aspect of the disclosure provide a mapping mode determination method, performed by a sending device. The method includes:

determining a mapping mode between at least one codeword within at least one transmission period and an orbital angular momentum (OAM) modality; and
transmitting the at least one codeword within the at least one transmission period based on the mapping mode.

Optionally, in an embodiment of the disclosure, determining the mapping mode between the at least one codeword within the at least one transmission period and the OAM modality includes:

determining a number of OAM modalities corresponding to codewords within a transmission period based on a number M of the codewords within the transmission period and a number N of OAM modalities, where M and N are both positive integers, and M<N; and
determining an OAM modality corresponding to at least one codeword within the transmission period based on an agreement-based determination method and the number of OAM modalities corresponding to the codewords within the transmission period.

Optionally, in an embodiment of the disclosure, determining the number of OAM modalities corresponding to the codewords within the transmission period based on the number M of the codewords within the transmission period and the number N of OAM modalities includes:

in response to the number N of OAM modalities being divisible by the number M of codewords within one transmission period, determining that the number of OAM modalities corresponding to the codewords within the one transmission period is N/M; or in response to the number N of OAM modalities being indivisible by the number M of codewords within one transmission period, selecting $(N-M\lfloor N/M\rfloor)$ codewords from all codewords within the one transmission period, and determining that a number of OAM modalities corresponding to the selected codewords is $\lceil N/M\rceil$, and a number of OAM modalities corresponding to codewords other than the selected codewords is $\lfloor N/M\rfloor$; in which $\lceil.\rceil$ is a rounding-up function, [.] is a rounding-down function.

Optionally, in an embodiment of the disclosure, the agreement-based determination method includes at least one of:

method 1: mapping one codeword onto L consecutive OAM modalities, where L is a number of OAM modalities corresponding to the codeword; or
method 2: mapping one codeword onto L nonconsecutive OAM modalities, where L is a number of OAM modalities corresponding to the codeword.

Optionally, in an embodiment of the disclosure, the sending device includes a relay device and/or a user equipment (UE).

Determining the mapping mode between the at least one codeword within the at least one transmission period and the OAM modality includes: obtaining a modality value of the OAM modality corresponding to the at least one codeword within the at least one transmission period indicated by a base station through a signaling.

Optionally, in an embodiment of the disclosure, the sending device is a base station, and
the method further includes:
indicating a modality value of the OAM modality corresponding to the at least one codeword within the at least one transmission period to a receiving device through a signaling.

Optionally, in an embodiment of the disclosure, the signaling includes at least one of:

a higher-layer signaling; or
a physical-layer signaling.

Embodiments of a second aspect of the disclosure provide a mapping mode determination method, performed by a receiving device. The method includes:

determining a mapping mode between at least one codeword within at least one transmission period and an orbital angular momentum (OAM) modality; and
receiving the at least one codeword within the at least one transmission period based on the mapping mode.

Optionally, in an embodiment of the disclosure, determining the mapping mode between the at least one codeword within the at least one transmission period and the OAM modality includes:

determining a number of OAM modalities corresponding to codewords within a transmission period based on a number M of the codewords within the transmission period and a number N of OAM modalities, where M and N are both positive integers, and M<N; and
determining an OAM modality corresponding to at least one codeword within the transmission period based on an agreement-based determination method and the number of OAM modalities corresponding to the codewords within the transmission period.

Optionally, in an embodiment of the disclosure, determining the number of OAM modalities corresponding to the codewords within the transmission period based on the number M of the codewords within the transmission period and the number N of OAM modalities includes:

in response to the number N of OAM modalities being divisible by the number M of codewords within one transmission period, determining that the number of OAM modalities corresponding to the codewords within the one transmission period is N/M; or
in response to the number N of OAM modalities being indivisible by the number M of codewords within one transmission period, selecting

$$(N - M\lfloor N/M \rfloor)$$

codewords from all codewords within the one transmission period, and determining that a number of OAM modalities corresponding to the selected codewords is $\lceil N/M \rceil$, and a number of OAM modalities corresponding to codewords other than the selected codewords is $\lfloor N/M \rfloor$;

in which $\lceil . \rceil$ is a rounding-up function, [.] is a rounding-down function.

Optionally, in an embodiment of the disclosure, the agreement-based determination method includes at least one of:

method 1: mapping one codeword onto L consecutive OAM modalities, where L is a number of OAM modalities corresponding to the codeword; or
method 2: mapping one codeword onto L nonconsecutive OAM modalities, where L is a number of OAM modalities corresponding to the codeword.

Optionally, in an embodiment of the disclosure, the receiving device includes a relay device and/or a user equipment (UE).

Determining the mapping mode between the at least one codeword within the at least one transmission period and the OAM modality includes:
obtaining a modality value of the OAM modality corresponding to the at least one codeword within the at least one transmission period indicated by a base station through a signaling.

Optionally, in an embodiment of the disclosure, the receiving device is a base station, and
the method further includes:
indicating a modality value of the OAM modality corresponding to the at least one codeword within the at least one transmission period to a sending device through a signaling.

Optionally, in an embodiment of the disclosure, the signaling includes at least one of:

a higher-layer signaling; or
a physical-layer signaling.

Embodiments of a third aspect of the disclosure provide a mapping mode determination apparatus. The apparatus includes:

a determining module, configured to determine a mapping mode between each codeword within each transmission period and an orbital angular momentum (OAM) modality; and
a transmitting module, configured to transmit each codeword within each transmission period based on the mapping mode.

Embodiments of a fourth aspect of the disclosure provide a mapping mode determination apparatus. The apparatus includes:

a determining module, configured to determine a mapping mode between each codeword within each transmission period and an orbital angular momentum (OAM) modality; and

a transmitting module, configured to transmit each codeword within each transmission period based on the mapping mode.

Embodiments of a fifth aspect of the disclosure provide a communication device, including a processor and a memory having a computer program stored thereon. The processor is configured to execute the computer program to cause the communication device to perform the method provided in the embodiments of the first aspect of the disclosure.

Embodiments of a sixth aspect of the disclosure provide a communication device, including a processor and a memory having a computer program stored thereon. The processor is configured to execute the computer program to cause the communication device to perform the method provided in the embodiments of the second aspect of the disclosure.

Embodiments of a seventh aspect of the disclosure provide a communication device, including a processor and an interface circuit.

The interface circuit is configured to receive code instructions and transmit the code instructions to the processor.

The processor is configured to execute the code instructions to perform the method provided in the embodiments of the first aspect of the disclosure.

Embodiments of an eighth aspect of the disclosure provide a communication device, including a processor and an interface circuit.

The interface circuit is configured to receive code instructions and transmit the code instructions to the processor.

The processor is configured to execute the code instructions to perform the method provided in the embodiments of the second aspect of the disclosure.

Embodiments of a ninth aspect of the disclosure provide a computer-readable storage medium having instructions stored thereon. When the instructions are executed, the method provided in the embodiments of the first aspect of the disclosure is performed.

Embodiments of a tenth aspect of the disclosure provide a computer-readable storage medium having instructions stored thereon. When the instructions are executed, the method provided in the embodiments of the second aspect of the disclosure is performed.

In summary, in the mapping mode determination method/apparatus/device/user equipment/base station and the storage medium provided in embodiments of the disclosure, the mapping mode between at least one codeword within at least one transmission period and an OAM modality may be determined, and then the at least one codeword within the at least one transmission period may be transmitted based on the mapping mode. Therefore, in embodiments of the disclosure, a mapping method from codewords to OAM modalities is proposed. With the method provided in this disclosure, each codeword can be mapped to its corresponding transmission modality to ensure maximum utilization of transmission resources.

**BRIEF DESCRIPTION OF THE DRAWINGS**

The above and/or additional aspects and advantages of the disclosure will become apparent and readily appreciated from the following descriptions made with reference to the drawings, in which:

FIG. 1 is a flowchart of a mapping mode determination method according to an embodiment of the disclosure.

FIG. 2 is a flowchart of a mapping mode determination method according to another embodiment of the disclosure.

FIG. 3a is a flowchart of a mapping mode determination method according to another embodiment of the disclosure.

FIG. 3b is a flowchart of a mapping mode determination method according to another embodiment of the disclosure.

FIG. 4 is a flowchart of a mapping mode determination method according to another embodiment of the disclosure.

FIG. 5 is a flowchart of a mapping mode determination method according to another embodiment of the disclosure.

FIG. 6a is a flowchart of a mapping mode determination method according to another embodiment of the disclosure.

FIG. 6b is a flowchart of a mapping mode determination method according to another embodiment of the disclosure.

FIG. 7 is a block diagram of a mapping mode determination apparatus according to an embodiment of the disclosure.

FIG. 8 is a block diagram of a mapping mode determination apparatus according to another embodiment of the disclosure.

FIG. 9 is a block diagram of a user equipment according to an embodiment of the disclosure.

FIG. 10 is a block diagram of a network device according to an embodiment of the disclosure.

## DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit the embodiments of the disclosure. The singular forms "a" and "the" used in the embodiments of the disclosure and the appended claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

A detailed description is made to a mapping mode determination method, an apparatus, a user equipment (UE), a network device, and a storage medium provided in embodiments of the disclosure in the following, with reference to the accompanying drawings.

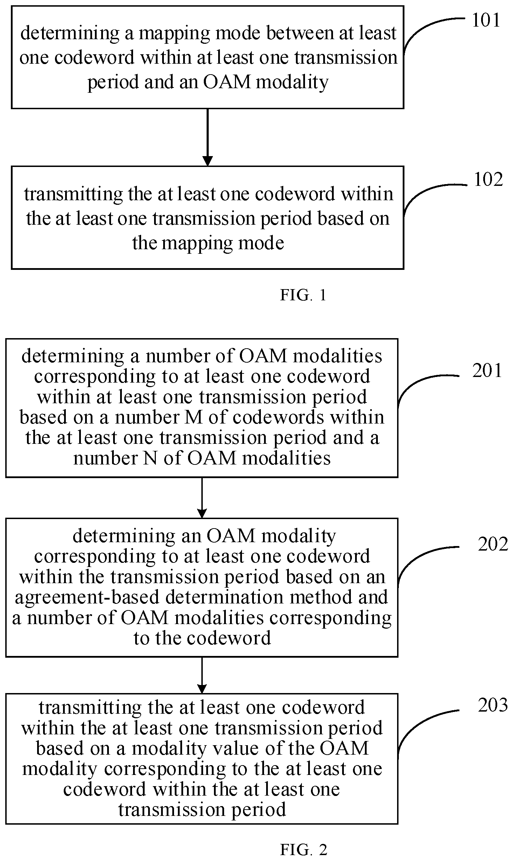

FIG. 1 is a flowchart of a mapping mode determination method according to an embodiment of the disclosure. The method is performed by a sending device. As illustrated in FIG. 1, the mapping mode determination method includes following steps.

Step 101, a mapping mode between at least one codeword (and/or transport block (TB)) within at least one transmission period and an orbital angular momentum (OAM) modality is determined.

In an embodiment of the disclosure, the sending device may be any one of a relay device, a UE, and a base station. In an embodiment of the disclosure, the UE may be a device that provides voice and/or data connectivity to a user. The UE can communicate with one or more core networks through a radio access network (RAN). The UE can be an Internet of Things (IoT) terminal such as a sensor device, a mobile phone (or a "cellular" phone), and a computer with an IoT terminal, such as a fixed, portable, pocket, handheld, computer built-in, or vehicle-mounted device. For example, the UE may be a station (STA), a subscriber unit, a subscriber station, a mobile station, a mobile, a remote station, an access point, a remote terminal, an access terminal, a user device, or a user agent. Or, the UE may also be a device for an unmanned aerial vehicle. Or, the UE may also be an in-vehicle device, for example, an electronic control unit (ECU) having a wireless communication capability, or a wireless terminal external to an ECU. Or, the UE may also be a roadside device, such as a street light, a signal light, or other roadside device with a wireless communication capability.

In an embodiment of the disclosure, the method for determining the mapping mode includes at least one of:

> method 1, determining the mapping mode based on an agreement; or
> method 2, determining the mapping mode based on a configuration of a base station.

The specific methods for determining the mapping mode in method 1 and method 2 may be detailed in following embodiments.

It should be noted that, in an embodiment of the disclosure, the method for determining the mapping mode applicable to different sending devices may vary. In an embodiment of the disclosure, for the above method 1, when the sending device is any of a relay device, a UE, or a base station, method 1 is applicable for the sending device to determine the mapping mode. In another embodiment of the disclosure, for the above method 2, it is applicable for the sending device to determine the mapping mode only when the sending device is a relay device and/or a UE (i.e. the sending device is not a base station). Furthermore, it should be noted that, in an embodiment of the disclosure, when the sending device is a base station, the receiving device is a relay device and/or a UE. At this time, the sending device may configure a mapping mode to the receiving device, so that the receiving device can determine the mapping mode based on the configuration of the base station.

Step 102, the at least one codeword within the at least one transmission period is transmitted based on the mapping mode.

In an embodiment of the disclosure, after the sending device determines the mapping mode between the codeword and the OAM modality through step 101, it can map each codeword to a corresponding OAM modality for transmission based on the mapping mode.

In summary, in the mapping mode determination method provided in embodiments of the disclosure, the mapping mode between at least one codeword within at least one transmission period and an OAM modality may be determined, and then the at least one codeword within the at least one transmission period may be transmitted based on the mapping mode. Therefore, in embodiments of the disclosure, a mapping method from codewords to OAM modalities is proposed. With the method provided in this disclosure, each codeword can be mapped to its corresponding transmission modality to ensure maximum utilization of transmission resources.

FIG. 2 is a flowchart of a mapping mode determination method according to an embodiment of the disclosure. The method is performed by a sending device. The sending device is any one of a relay device, a UE, or a base station. An embodiment in FIG. 2 corresponds to an embodiment corresponding to "method 1, determining the mapping mode based on an agreement". As shown in FIG. 2, the mapping mode determination method may include the following steps:

Step 201: a number of OAM modalities corresponding to at least one codeword within at least one transmission period is determined based on a number M of codewords within the at least one transmission period and a number N of OAM modalities, where M and N are both positive integers, and M<N.

In an embodiment of the disclosure, the number N of OAM modalities may be a number of OAM modalities currently available.

In an embodiment of the disclosure, a method for determining the number of OAM modalities corresponding to the at least one codeword within the at least one transmission period based on the number M of codewords within the at least one transmission period and the number N of OAM modalities may include followings.

In response to the number N of OAM modalities is divisible by the number M of codewords within one transmission period, it is determined that the number of OAM modalities corresponding to each codeword within the one transmission period is N/M. For example, in an embodiment of the disclosure, the number of codewords within a current transmission period is 2 and the number of OAM modalities is 10. The number of OAM modalities 10 can be evenly divided by the number of codewords 2 within the current transmission period. It can be determined that the number of OAM modalities corresponding to each codeword within the current transmission period is 10/2=5.

In response to the number N of OAM modalities is indivisible by the number M of codewords within one transmission period, $(N\text{-}M\lfloor N/M\rfloor)$ codewords are selected from all codewords within one transmission period, and it is determined that a number of OAM modalities corresponding to each selected codeword within the one transmission period is $\lceil N/M\rceil$, and a number of OAM modalities corresponding to each codeword other than the selected codewords is $\lfloor N/M\rfloor$. $\lceil \cdot \rceil$ is a rounding-up function, $\lfloor \cdot \rfloor$ is a rounding-down function.

It should be noted that, in an embodiment of the disclosure, the $(N\text{-}M\lfloor N/M\rfloor)$ codewords selected from all codewords within one transmission period can be randomly selected from the all codewords or selected based on an agreement rule. In an embodiment of the disclosure, the agreement rule may be determined by the sending device and the receiving device based on a protocol. For example, the agreement rule may be: selecting the first $(N\text{-}M\lfloor N/M\rfloor)$ codewords from all codewords within a transmission period, or selecting the last $(N\text{-}M\lfloor N/M\rfloor)$ codewords from all codewords within a transmission period.

For example, in an embodiment of the disclosure, the number of codewords within a current transmission period is 3 and the number of OAM modalities is 10. The number of OAM modalities based on 10 cannot be evenly divided by the number 3 of codewords in the current transmission period, then $(10\text{-}3\times\lfloor 10/3\rfloor)=1$ codewords can be selected from all codewords in the current transmission period (for example, 1 codeword can be randomly selected from the 3 codewords, or the first codeword of the 3 codewords can be selected, or the last codeword of the 3 codewords can be selected), and it is determined that the number of OAM modalities corresponding to the selected codeword is [10/3]=4, and the number of OAM modalities corresponding to the other two codewords is $\lfloor 10/3\rfloor=3$.

Step 202, an OAM modality corresponding to at least one codeword within the transmission period is determined based on an agreement-based determination method and a number of OAM modalities corresponding to the codeword.

In an embodiment of the disclosure, after determining the number of OAM modalities corresponding to each codeword through the above step 202, a specific modality value of an OAM modality corresponding to each codeword can be further determined by executing this step. Then, each codeword can be mapped to the corresponding OAM modality for transmission.

In an embodiment of the disclosure, the modality value of the OAM modality corresponding to each codeword can be determined based on an agreement-based determination method. The agreement-based determination method can be agreed upon based on a protocol by the sending device and the receiving device. The specific method for determining the agreement-based determination method may include at least one of the following methods.

Method 1: each codeword is mapped to L consecutive OAM modalities, where L is a number of OAM modalities corresponding to each codeword.

For example, in an embodiment of the disclosure, the number L of OAM modalities corresponding to each codeword determined in step 101 is 4, and the currently available OAM modalities include [1-8]. Method 1 can be used to map each codeword to four consecutive OAM modalities. For example, the first codeword is mapped to OAM modalities with modality values of [1,2,3,4], and the second codeword is mapped to OAM modalities with modality values of [5,6,7,8].

Method 2: each codeword is mapped to L nonconsecutive OAM modalities, where L is a number of OAM modalities corresponding to each codeword. In an embodiment of the disclosure, the nonconsecutive L OAM modalities may be L OAM modalities with equal spacing. In another embodiment of the disclosure, the nonconsecutive L OAM modalities may be L nonlinear modalities.

For example, in an embodiment of the disclosure, the number of OAM modalities corresponding to each codeword determined in step 101 is 4, and the currently available OAM modalities include [1-8], then each codeword can be mapped to four equally spaced OAM modalities using method 2. For example, the first codeword can be mapped to OAM modalities with modality values of [1,3,5,7], the second codeword can be mapped to OAM modalities with modality values of [2,4,6,8]. Or, each codeword can be mapped to four non-linear OAM modalities using method 2. For example, the first codeword can be mapped to OAM modalities with modality values of [1,2,4,7], and the second codeword can be mapped to OAM modalities with modality values of [3,5,6,8].

Step 203, the at least one codeword within the at least one transmission period is transmitted based on a modality value of the OAM modality corresponding to the at least one codeword within the at least one transmission period.

In an embodiment of the disclosure, after the sending device determines the mapping mode between the codeword and the OAM modality through step 101, each codeword can be mapped to the corresponding OAM modality for transmission based on the mapping mode.

For example, if there is a mapping relationship between the first codeword in the current transmission period and OAM modalities [1,2,3,4], the first codeword can be mapped to OAM modality 1, OAM modality 2, OAM modality 3, and OAM modality 4, respectively, for transmission.

In summary, in the mapping mode determination method provided in embodiments of the disclosure, the mapping mode between at least one codeword within at least one transmission period and an OAM modality may be determined, and then the at least one codeword within the at least one transmission period may be transmitted based on the mapping mode. Therefore, in embodiments of the disclosure, a mapping mode from codewords to OAM modalities is proposed. With the method provided in this disclosure, each codeword can be mapped to its corresponding transmission modality to ensure maximum utilization of transmission resources.

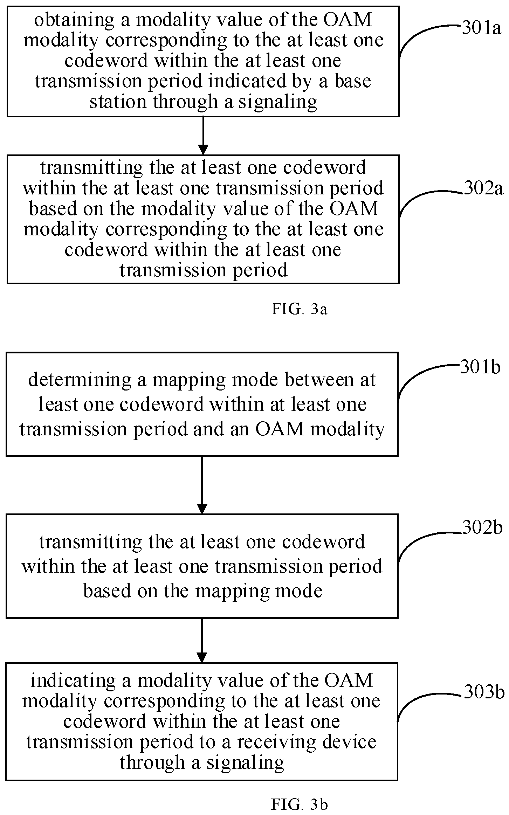

FIG. 3a is a flowchart of a mapping mode determination method according to an embodiment of the disclosure. The method is performed by a sending device, which is either a relay device or a UE. An embodiment in FIG. 3a corresponds to an embodiment corresponding to "method 2, determining the mapping mode based on a configuration of a base station". As shown in FIG. 3a, the mapping mode determination method may include the following steps:

Step 301a, a modality value of the OAM modality corresponding to the at least one codeword within the at least one transmission period indicated by a base station through a signaling is obtained.

In an embodiment of the disclosure, the base station may indicate the mapping mode of the OAM modality corresponding to each codeword within each transmission period of a service channel to the UE through signaling.

In an embodiment of the disclosure, the signaling includes at least one of the following:

a higher-layer signaling; or
a physical-layer signaling.

Furthermore, in an embodiment of the disclosure, the above higher-layer signaling may include at least one of the following:

RRC (Radio Resource Control);
MAC CE (Medium Access Control Control Element). The physical-layer signaling may include DCI (Downlink Control Information).

For example, in an embodiment of the disclosure, the base station may indicate through an RRC signaling that modality values of OAM modalities corresponding to the first codeword within the current transmission period is [1,3,5,7], and modality values of OAM modalities corresponding to the second codeword is [2,4,6,8].

Step 302a, the at least one codeword within the at least one transmission period is transmitted based on the modality value of the OAM modality corresponding to the at least one codeword within the at least one transmission period.

In summary, in the mapping mode determination method provided in embodiments of the disclosure, the mapping mode between at least one codeword within at least one transmission period and an OAM modality may be determined, and then the at least one codeword within the at least one transmission period may be transmitted based on the mapping mode. Therefore, in embodiments of the disclosure, a mapping mode from codewords to OAM modalities is proposed. With the method provided in this disclosure, each codeword can be mapped to its corresponding transmission modality to ensure maximum utilization of transmission resources.

FIG. 3b is a flowchart of a mapping mode determination method according to an embodiment of the disclosure. The method is performed by a sending device, which is a base station. As shown in FIG. 3b, the mapping mode determination method may include the following steps:

Step 301b, a mapping mode between at least one codeword within at least one transmission period and an OAM modality is determined.

Step 302b, the at least one codeword within the at least one transmission period is transmitted based on the mapping mode.

Step 303b, a modality value of the OAM modality corresponding to the at least one codeword within the at least one transmission period is indicated to a receiving device through a signaling.

In an embodiment of the disclosure, the receiving device may be a relay device and/or a UE.

A detailed introduction of steps 301b-303b can refer to the description of the above embodiments, and it is not elaborated here in embodiments of the disclosure.

In summary, in the mapping mode determination method provided in embodiments of the disclosure, the mapping mode between at least one codeword within at least one transmission period and the OAM modality may be determined, and then the at least one codeword within the at least one transmission period may be transmitted based on the mapping mode. Therefore, in embodiments of the disclosure, a mapping method from codewords to OAM modalities is proposed. With the method provided in this disclosure, each codeword can be mapped to its corresponding transmission modality to ensure maximum utilization of transmission resources.

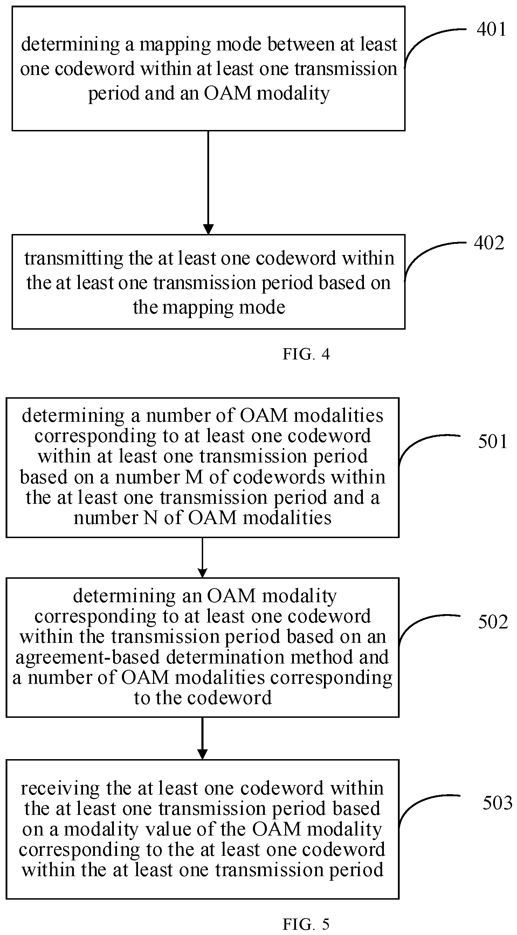

FIG. 4 is a flowchart of a mapping mode determination method according to an embodiment of the disclosure. The method is performed by a receiving device. As shown in FIG. 4, the mapping mode determination method may include the following steps:

Step 401, a mapping mode between at least one codeword within at least one transmission period and an OAM modality is determined.

In an embodiment of the disclosure, the receiving device may be any one of a relay device, a UE, or a base station.

In an embodiment of the disclosure, the method for determining the mapping mode includes at least one of the following:

method 1: determining the mapping mode based on an agreement; or
method 2: determining the mapping mode based on a configuration of a base station.

The specific methods for determining the mapping mode in method 1 and method 2 can refer to the above embodiments, and it is not elaborated here in embodiments of the disclosure.

It should be noted that, in an embodiment of the disclosure, the method for determining the mapping mode applicable to different receiving devices may vary. In an embodiment of the disclosure, for the above method 1, when the receiving device is any of a relay device, a UE, or a base station, method 1 is applicable for the receiving device to determine the mapping mode. In another embodiment of the disclosure, for the above method 2, it is applicable for the receiving device to determine the mapping mode only when the receiving device is a relay device and/or a UE (i.e. the receiving device is not a base station). Furthermore, it should be noted that, in an embodiment of the disclosure, when the receiving device is a base station, the sending device is a relay device and/or a UE. At this time, the receiving device may configure a mapping mode to the sending device, so that the sending device can determine the mapping mode based on the configuration of the base station.

Step 402, the at least one codeword within the at least one transmission period is received based on the mapping mode.

In an embodiment of the disclosure, after the sending device determines the mapping mode between the codeword and the OAM modality through step 401, it can map each codeword to a corresponding OAM modality for transmission based on the mapping mode.

In summary, in the mapping mode determination method provided in embodiments of the disclosure, the mapping mode between at least one codeword within at least one transmission period and the OAM modality may be determined, and then the at least one codeword within the at least one transmission period may be transmitted based on the mapping mode. Therefore, in embodiments of the disclosure, a mapping method from codewords to OAM modalities is proposed. Through the method provided in this disclosure, each codeword can be mapped to its corresponding transmission modality to ensure maximum utilization of transmission resources.

FIG. 5 is a flowchart of a mapping mode determination method according to an embodiment of the disclosure. The method is performed by a receiving device. The receiving device is any one of a relay device, a UE, or a base station. An embodiment in FIG. 5 corresponds to an embodiment corresponding to "method 1, determining the mapping mode based on an agreement". As shown in FIG. 5, the mapping mode determination method may include the following steps:

Step 501, a number of OAM modalities corresponding to at least one codeword within at least one transmission period is determined based on a number M of codewords within the at least one transmission period and a number N of OAM modalities, where M and N are both positive integers.

Step 502, an OAM modality corresponding to the at least one codeword within the transmission period is determined based on an agreement-based determination method and a number of OAM modalities corresponding to the codeword.

Step 503, the at least one codeword within the at least one transmission period is received based on a modality value of the OAM modality corresponding to the at least one codeword within the at least one transmission period.

Other introductions regarding steps 501 to 503 can refer to the description of the above embodiments, and it is not elaborated here in embodiments of the disclosure.

In summary, in the mapping mode determination method provided in embodiments of the disclosure, the mapping mode between the at least one codeword within the at least one transmission period and the OAM modality is determined, and then the at least one codeword within the at least one transmission period may be transmitted based on the mapping mode. Therefore, in embodiments of the disclosure, a mapping mode from codewords to OAM modalities is proposed. Through the method provided in this disclosure, each codeword can be mapped to its corresponding transmission modality to ensure maximum utilization of transmission resources.

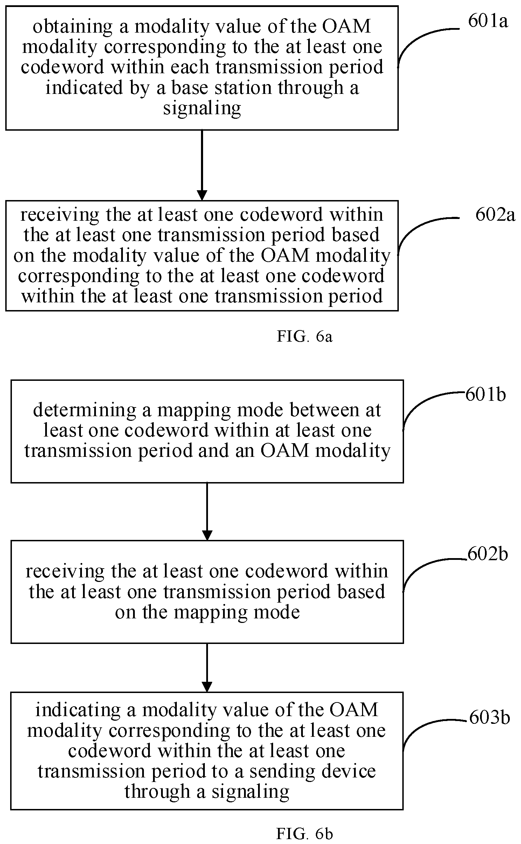

FIG. 6a is a flowchart of a mapping mode determination method according to an embodiment of the disclosure. The method is performed by a receiving device. The receiving device is either a relay device or a UE. An embodiment in FIG. 6a corresponds to an embodiment corresponding to "method 2, determining the mapping mode based on a configuration of a base station". As shown in FIG. 6a, the mapping mode determination method may include the following steps:

Step 601a, a modality value of the OAM modality corresponding to the at least one codeword within the at least one transmission period indicated by a base station through a signaling is obtained.

Step 602b, the at least one codeword within the at least one transmission period is received based on the modality value of the OAM modality corresponding to the at least one codeword within the at least one transmission period.

Other introductions of steps 601b to 602b, can refer to the description of the above embodiments, and it is not elaborated here in embodiments of the disclosure.

In summary, in the mapping mode determination method provided in embodiments of the disclosure, the mapping mode between at least one codeword within at least one transmission period and an OAM modality is determined, and then the at least one codeword within the at least one transmission period may be transmitted based on the mapping mode. Therefore, in embodiments of the disclosure, a mapping mode from codewords to OAM modalities is proposed. Through the method provided in this disclosure, each codeword can be mapped to its corresponding transmission modality to ensure maximum utilization of transmission resources.

FIG. 6b is a flowchart of a mapping mode determination method according to an embodiment of the disclosure. The method is performed by a receiving device, which is a base station. As shown in FIG. 6b, the mapping mode determination method may include the following steps:

Step 601b, a mapping mode between at least one codeword within at least one transmission period and an OAM modality is determined.

Step 602b, the at least one codeword within the at least one transmission period is received based on the mapping mode.

Step 603b, a modality value of the OAM modality corresponding to the at least one codeword within the at least one transmission period is indicated to a sending device through a signaling.

In an embodiment of the disclosure, the sending device is a relay device and/or a UE.

A detailed introduction of steps 601b-603b can refer to the description of the above embodiments, and it is not elaborated here in embodiments of the disclosure.

In summary, in the mapping mode determination method provided in embodiments of the disclosure, the mapping mode between at least one codeword within at least one transmission period and the OAM modality may be determined, and then the at least one codeword within the at least one transmission period may be transmitted based on the mapping mode. Therefore, in embodiments of the disclosure, a mapping mode from codewords to OAM modalities is proposed. Through the method provided in this disclosure, each codeword can be mapped to its corresponding transmission modality to ensure maximum utilization of transmission resources.

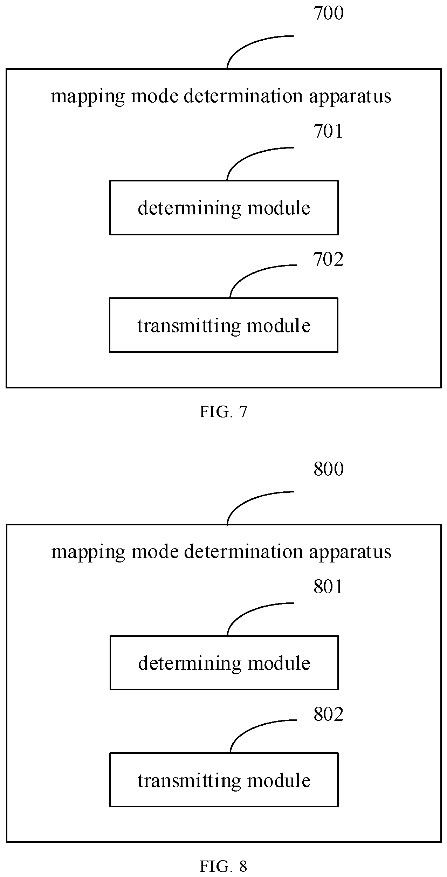

FIG. 7 is a block diagram of a mapping mode determination apparatus 700 according to an embodiment of the disclosure. The method is performed by a sending device. As shown in FIG. 7, the mapping mode determination apparatus includes:

a determining module, configured to determine a mapping mode between at least one codeword within at least one transmission period and an orbital angular momentum (OAM) modality; and

a transmitting module, configured to transmit the at least one codeword within the at least one transmission period based on the mapping mode.

In summary, in the mapping mode determination apparatus provided in embodiments of the disclosure, the mapping mode between at least one codeword within at least one transmission period and the OAM modality may be determined, and then the at least one codeword within the at least one transmission period may be transmitted based on the mapping mode. Therefore, in embodiments of the disclosure, a mapping method from codewords to OAM modalities is proposed. With the method provided in this disclosure, each codeword can be mapped to its corresponding transmission modality to ensure maximum utilization of transmission resources.

Optionally, in an embodiment of the disclosure, the determining module is configured to:

determine a number of OAM modalities corresponding to codewords within a transmission period based on a number M of the codewords within the transmission period and a number N of OAM modalities, where M and N are both positive integers, and M<N; and

determine an OAM modality corresponding to at least one codeword within the transmission period based on an agreement-based determination method and the number of OAM modalities corresponding to the codewords within the transmission period.

Optionally, in an embodiment of the disclosure, the determining module is configured to:

in response to the number N of OAM modalities being divisible by the number M of codewords within one transmission period, determine that the number of OAM modalities corresponding to the codewords within the one transmission period is N/M; or
in response to the number N of OAM modalities being indivisible by the number M of codewords within one transmission period, select $(N - M \lfloor N/M \rfloor)$ codewords from all codewords within the one transmission period, and determine that a number of OAM modalities corresponding to the selected codewords is $\lceil N/M \rceil$, and a number of OAM modalities corresponding to codewords other than the selected codewords is $\lfloor N/M \rfloor$;
in which $\lceil . \rceil$ is a rounding-up function, [.] is a rounding-down function.

Optionally, in an embodiment of the disclosure, the agreement-based determination method includes at least one of:

method 1: mapping one codeword onto L consecutive OAM modalities, where L is a number of OAM modalities corresponding to the codeword; or
method 2: mapping one codeword onto L nonconsecutive OAM modalities, where L is a number of OAM modalities corresponding to the codeword.

Optionally, in an embodiment of the disclosure, the sending device includes a relay device and/or a user equipment (UE).

The determining module is configured to:
obtain a modality value of the OAM modality corresponding to the at least one codeword within the at least one transmission period indicated by a base station through a signaling.

Optionally, in an embodiment of the disclosure, the sending device is a base station, and
the apparatus is further configured to:
indicate a modality value of the OAM modality corresponding to the at least one codeword within the at least one transmission period to a receiving device through a signaling.

Optionally, in an embodiment of the disclosure, the signaling includes at least one of:

a higher-layer signaling; or
a physical-layer signaling.

FIG. 8 is a block diagram of a mapping mode determination apparatus according to an embodiment of the disclosure. The method is performed by a receiving device. As shown in FIG. 8, the mapping mode determination apparatus includes:

a determining module, configured to determine a mapping mode between at least one codeword within at least one transmission period and an orbital angular momentum (OAM) modality; and
a transmitting module, configured to receive the at least one codeword within the at least one transmission period based on the mapping mode.

In summary, in the mapping mode determination apparatus provided in embodiments of the disclosure, the mapping mode between at least one codeword within at least one transmission period and the OAM modality may be determined, and then the at least one codeword within the at least one transmission period may be received based on the mapping mode. Therefore, in embodiments of the disclosure, a mapping method from codewords to OAM modalities is proposed. With the method provided in this disclosure, each codeword can be mapped to its corresponding transmission modality to ensure maximum utilization of transmission resources.

Optionally, in an embodiment of the disclosure, the determining module is configured to:

determine a number of OAM modalities corresponding to codewords within a transmission period based on a number M of the codewords within the transmission period and a number N of OAM modalities, where M and N are both positive integers, and M<N; and

determine an OAM modality corresponding to at least one codeword within the transmission period based on an agreement-based determination method and the number of OAM modalities corresponding to the codewords within the transmission period.

Optionally, in an embodiment of the disclosure, the determining module is configured to:

in response to the number N of OAM modalities being divisible by the number M of codewords within one transmission period, determine that the number of OAM modalities corresponding to the codewords within the one transmission period is N/M; or
in response to the number N of OAM modalities being indivisible by the number M of codewords within one transmission period, select $(N - M\lfloor N/M \rfloor)$ codewords from all codewords within the one transmission period, and determine that a number of OAM modalities corresponding to the selected codewords is $\lceil N/M \rceil$, and a number of OAM modalities corresponding to codewords other than the selected codewords is $\lfloor N/M \rfloor$; in which $\lceil . \rceil$ is a rounding-up function, [.] is a rounding-down function.

Optionally, in an embodiment of the disclosure, the agreement-based determination method includes at least one of:

method 1: mapping one codeword onto L consecutive OAM modalities, where L is a number of OAM modalities corresponding to the codeword; or
method 2: mapping one codeword onto L nonconsecutive OAM modalities, where L is a number of OAM modalities corresponding to the codeword.

Optionally, in an embodiment of the disclosure, the receiving device includes a relay device and/or a user equipment (UE).
The determining module is configured to:
obtain a modality value of the OAM modality corresponding to the at least one codeword within the at least one transmission period indicated by a base station through a signaling.
Optionally, in an embodiment of the disclosure, the receiving device is a base station, and
the apparatus is further configured to:
indicate a modality value of the OAM modality corresponding to the at least one codeword within the at least one transmission period to a sending device through a signaling.
Optionally, in an embodiment of the disclosure, the signaling includes at least one of:

a higher-layer signaling; or
a physical-layer signaling.

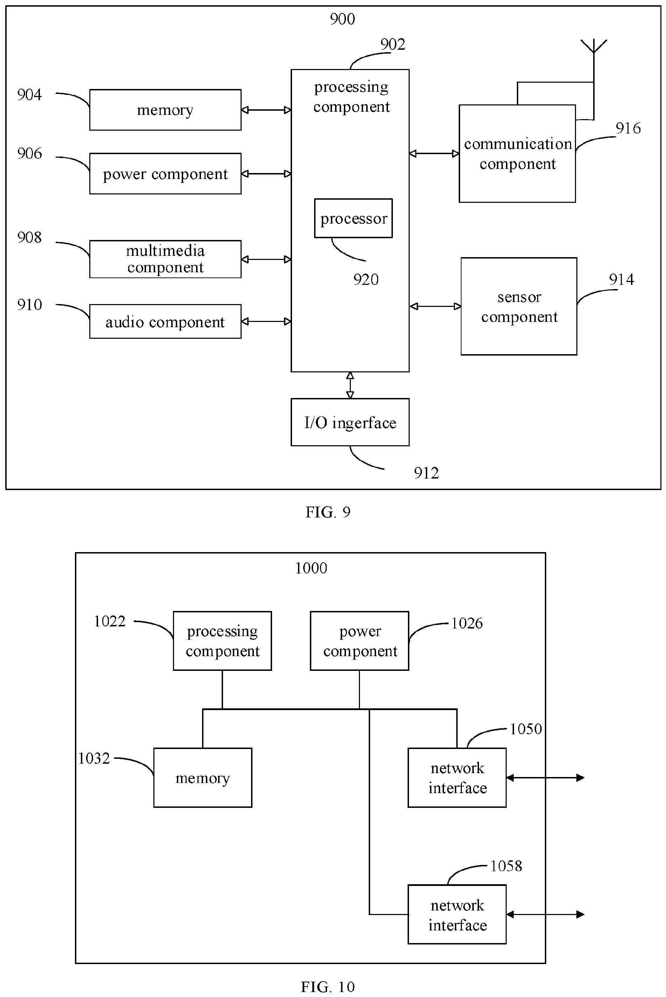

FIG. 9 is a block diagram illustrating a UE 900 according to an embodiment of the disclosure. For example, the UE 900 may be a mobile phone, a computer, a digital broadcasting terminal device, a message transceiver device, a game console, a tablet device, a medical device, a fitness device and a personal digital assistant.
As illustrated in FIG. 9, the UE 900 may include one or more of the following components: a processing component 902, a memory 904, a power component 906, a multimedia component 908, an audio component 910, an input/output (I/O) interface 912, a sensor component 914, and a communication component 916.
The processing component 902 typically controls overall operations of the UE 900, such as the operations associated with display, telephone calls, data communications, camera operations, and recording operations. The processing component 902 may include one or more processors 920 to perform all or part of the steps in the above described method. Moreover, the processing component 902 may include one or more modules which facilitate the interaction between the processing component 902 and other components. For example, the processing component 902 may include a multimedia module to facilitate the interaction between the multimedia component 908 and the processing component 902.
The memory 904 is configured to store various types of data to support the operation of the UE 900. Examples of such data include instructions for any applications or methods operated on the UE 900, contact data, phonebook data, messages, pictures, videos, etc. The memory 904 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.
The power component 906 provides power to various components of the UE 900. The power component 906 may include a power management system, one or more power sources, and any other components associated with the generation, management, and distribution of power in the UE 900.
The multimedia component 908 includes a screen providing an output interface between the UE 900 and a user. In some embodiments, the screen may include a Liquid Crystal Display (LCD) and a Touch Panel (TP). In case that the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 908 includes a front-facing camera and/or a rear-facing camera. When the UE 900 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 910 is configured to output and/or input audio signals. For example, the audio component 910 includes a microphone (MIC) configured to receive an external audio signal when the UE 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 913 includes one or more sensors to provide status assessments of various aspects of the UE 900. For instance, the sensor component 913 may detect an open/closed status of the UE 900, relative positioning of components, e.g., the display and the keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may also include a light sensor, such as a Complementary Metal Oxide Semiconductor (CMOS) or Charge-Coupled Device (CCD) image sensor, for use in imaging applications. In some embodiments, the sensor component 913 may also include an accelerometer sensor, a gyroscope sensor, a magnetic sensor, a pressure sensor, or a temperature sensor.

The communication component 916 is configured to facilitate communication, wired or wirelessly, between the UE 900 and other devices. The UE 900 can access a wireless network based on a communication standard, such as Wi-Fi, 2G or 3G, or a combination thereof. In an embodiment, the communication component 916 receives a broadcast signal from an external broadcast management system or broadcasts associated information via a broadcast channel. In an embodiment, the communication component 916 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 900 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

FIG. 10 is a block diagram illustrating a network device 1000 of an embodiment of the disclosure. For example, the network device 1000 may be provided as a network side device. As illustrated in FIG. 10, the network device 1000 includes a processing component 1011 consisting of one or more processors, and memory resources represented by a memory 1032 for storing instructions that may be executed by the processing component 1022, such as applications. The application programs stored in the memory 1032 may include one or more modules each corresponding to a set of instructions. In addition, the processing component 1010 is configured to execute the instructions to perform any of the methods described above that are applicable to the network device, for example, the methods shown in FIG. 1.

The network device 1000 may also include a power component 1026 configured to perform power management of the network device 1000, a wired or wireless network interface 1050 configured to connect the network device 1000 to a network, and an I/O interface 1058. The network device 1000 may operate based on an operating system stored in the memory 1032, such as Windows Server TM, Mac OS XTM, UnixTM, LinuxTM, FreeBSDTM, or the like.

In the above embodiments of the disclosure, the method provided in embodiments of the disclosure is introduced from the perspective of the network device and the UE. In order to achieve the various functions of the method provided in the above embodiments of the disclosure, the network device and the UE may include a hardware structure, a software module, or hardware structure plus software module to achieve the above functions. One of the above functions can be executed in the form of hardware structure, software module, or hardware structure plus software module.

In the above embodiments of the disclosure, the method provided in embodiments of the disclosure is introduced from the perspective of the network device and the UE. In order to achieve the various functions of the method provided in the above embodiments of the disclosure, the network device and UE may include a hardware structure, a software module, or hardware structure plus software module to achieve the above functions. One of the above functions can be executed in the form of hardware structure, software module, or hardware structure plus software module.

Embodiments of the disclosure provide a communication device. The communication device may include a transceiver module and a processing module.

The transceiver module can include a sending module and/or a receiving module. The sending module is used to implement a sending function, the receiving module is used to implement a receiving function, and the transceiver module can implement the sending and/or receiving function.

The communication device can be a terminal (such as the terminal in the above method embodiments), a device within a terminal, or a device that can be used together with the terminal. Alternatively, the communication device can be a network device, a device within a network device, or a device that can be used together with the network device.

Embodiments of the disclosure provide another communication device. The communication device can be a network device, a terminal (such as the terminal in the above method embodiments), a chip, a chip system, or a processor that supports the network device to implement the above method, and can also be a chip, a chip system, or a processor that supports the terminal to implement the above method. The device can be used to implement the methods in the above method embodiments, as described in the above method embodiments.

The communication device may include one or more processors. The processor may be a general-purpose processor or a dedicated processor, such as, a baseband processor and a central processor. The baseband processor is used for processing communication protocols and communication data. The central processor is used for controlling the communication device (e.g., a network device, a baseband chip, a terminal, a terminal chip, a distributed unit (DU), or a central unit (CU)), executing computer programs, and processing data of the computer programs.

Optionally, the communication device may include one or more memories on which a computer program may be stored. The processor executes the computer program to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device may include one or more interface circuits. The interface circuits are used to receive code instructions and transmit them to the processor. The processor runs the code instructions to cause the communication device to perform the method described in the method embodiments.

The communication device is a terminal (such the terminal in the above method embodiments). The processor is configured to perform the method shown in FIGs. 1-4.

The communication device is a network device. The transceiver is configured to perform the method shown in FIGs. 5-7.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device may be caused to perform the methods described in the method embodiments above. The computer program may be solidified in the processor, and in such case the processor may be implemented by hardware.

In an implementation, the communication device may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (such the UE in the above method embodiments), but the scope of the communication device described in the disclosure is not limited thereto, and the structure of the communication device may not be limited. The communication device may be a stand-alone device or may be part of a larger device. For example, the communication device may be:

(1) a stand-alone IC, a chip, a chip system or a subsystem;
(2) a collection of ICs including one or more ICs, optionally, the collection of ICs may also include storage components for storing data and computer programs;
(3) an ASIC, such as a modem;

(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, the chip includes a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a system for determining a sidelink duration. The system includes the communication device as a terminal (such the first terminal in the above method embodiments) and the communication device as a network device in the above embodiments. Or, the system includes the communication device as a terminal (such the first terminal in the above method embodiments) and the communication device as a network device in the above embodiments.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

**Claims**

1. A mapping mode determination method, performed by a sending device, comprising:

determining a mapping mode between at least one codeword within at least one transmission period and an orbital angular momentum (OAM) modality; and transmitting the at least one codeword within the at least one transmission period based on the mapping mode.

2. The method of claim 1, wherein determining the mapping mode between the at least one codeword within the at least one transmission period and the OAM modality comprises:

determining a number of OAM modalities corresponding to codewords within a transmission period based on a number M of the codewords within the transmission period and a number N of OAM modalities, where M and N are both positive integers, and M<N; and determining an OAM modality corresponding to at least one codeword within the transmission period based on an agreement-based determination method and the number of OAM modalities corresponding to the codewords within the transmission period.

3. The method of claim 2, wherein determining the number of OAM modalities corresponding to the codewords within the transmission period based on the number M of the codewords within the transmission period and the number N of OAM modalities comprises:

in response to the number N of OAM modalities being divisible by the number M of codewords within one transmission period, determining that the number of OAM modalities corresponding to the codewords within the one transmission period is N/M; or in response to the number N of OAM modalities being indivisible by the number M of codewords within one transmission period, selecting

$$(N - M\lfloor N/M \rfloor)$$

codewords from all codewords within the one transmission period, and determining that a number of OAM modalities corresponding to the selected codewords is

$$\lceil N/M \rceil$$

, and a number of OAM modalities corresponding to codewords other than the selected codewords is $\lfloor N/M \rfloor$; wherein $\lceil . \rceil$ is a rounding-up function, $[.]$ is a rounding-down function.

4. The method of claim 2, wherein the agreement-based determination method comprises at least one of:

method 1: mapping one codeword onto L consecutive OAM modalities, where L is a number of OAM modalities corresponding to the codeword; or method 2: mapping one codeword onto L nonconsecutive OAM modalities, where L is a number of OAM modalities corresponding to the codeword.

5. The method of claim 1, wherein the sending device comprises a relay device and/or a user equipment (UE); wherein determining the mapping mode between the at least one codeword within the at least one transmission period and the OAM modality comprises: obtaining a modality value of the OAM modality corresponding to the at least one codeword within the at least one transmission period indicated by a base station through a signaling.

6. The method of claim 1, wherein the sending device is a base station, and the method further comprises: indicating a modality value of the OAM modality corresponding to the at least one codeword within the at least one transmission period to a receiving device through a signaling.

7. The method of claim 5 or 6, wherein the signaling comprises at least one of:

a higher-layer signaling; or a physical-layer signaling.

8. A mapping mode determination method, performed by a receiving device, comprising:

determining a mapping mode between at least one codeword within at least one transmission period and an orbital angular momentum (OAM) modality; and receiving the at least one codeword within the at least one transmission period based on the mapping mode.

9. The method of claim 8, wherein determining the mapping mode between the at least one codeword within the at least one transmission period and the OAM modality comprises:

determining a number of OAM modalities corresponding to codewords within a transmission period based on a number M of the codewords within the transmission period and a number N of OAM modalities, where M and N are both positive integers, and M<N; and determining an OAM modality corresponding to at least one codeword within the transmission period based on an agreement-based determination method and the number of OAM modalities corresponding to the codewords within the transmission period.

10. The method of claim 9, wherein determining the number of OAM modalities corresponding to the codewords within the transmission period based on the number M of the codewords within the transmission period and the number N of OAM modalities comprises:

in response to the number N of OAM modalities being divisible by the number M of codewords within one transmission period, determining that the number of OAM modalities corresponding to the codewords within the one transmission period is N/M; or
in response to the number N of OAM modalities being indivisible by the number M of codewords within one transmission period, selecting

$$(N\text{-}M\lfloor N/M \rfloor)$$

codewords from all codewords within the one transmission period, and determining that a number of OAM modalities corresponding to the selected codewords is

$$\lceil N/M \rceil$$

, and a number of OAM modalities corresponding to codewords other than the selected codewords is $\lfloor N/M \rfloor$; wherein $\lceil . \rceil$ is a rounding-up function, [.] is a rounding-down function.

11. The method of claim 9, wherein the agreement-based determination method comprises at least one of:

method 1: mapping one codeword onto L consecutive OAM modalities, where L is a number of OAM modalities corresponding to the codeword; or
method 2: mapping one codeword onto L nonconsecutive OAM modalities, where L is a number of OAM modalities corresponding to the codeword.

12. The method of claim 8, wherein the receiving device comprises a relay device and/or a user equipment (UE);
wherein determining the mapping mode between the at least one codeword within the at least one transmission period and the OAM modality comprises:
obtaining a modality value of the OAM modality corresponding to the at least one codeword within the at least one transmission period indicated by a base station through a signaling.

13. The method of claim 8, wherein the receiving device is a base station, and
the method further comprises:
indicating a modality value of the OAM modality corresponding to the at least one codeword within the at least one transmission period to a sending device through a signaling.

14. The method of claim 12 or 13, wherein the signaling comprises at least one of:

a higher-layer signaling; or
a physical-layer signaling.

15. A mapping mode determination apparatus, comprising:

a determining module, configured to determine a mapping mode between at least one codeword within at least one transmission period and an orbital angular momentum (OAM) modality; and
a transmitting module, configured to receive the at least one codeword within the at least one transmission period based on the mapping mode.

16. A mapping mode determination apparatus, comprising:

a determining module, configured to determine a mapping mode between at least one codeword within at least one transmission period and an orbital angular momentum (OAM) modality; and
a transmitting module, configured to transmit the at least one codeword within the at least one transmission period based on the mapping mode.

17. A communication device, comprising a processor and a memory having a computer program stored thereon, wherein the processor is configured to execute the computer program stored on the memory to cause the communication device to perform the method of any of claims 1 to 7.

18. A communication device, comprising a processor and a memory having a computer program stored thereon, wherein the processor is configured to execute the computer program stored on the memory to cause the communication device to perform the method of any of claims 8 to 14.

19. A communication device, comprising: a processor and an interface circuit; wherein,

the interface circuit is configured to receive code instructions and transmit the code instructions to the processor; and

the processor is configured to run the code instructions to perform the method of any one of claims 1 to 7.

20. A communication device, comprising: a processor and an interface circuit; wherein,

  the interface circuit is configured to receive code instructions and transmit the code instructions to the processor; and
  the processor is configured to run the code instructions to perform the method of any one of claims 8 to 14.

21. A computer-readable storage medium having instructions stored thereon, wherein when the instructions are executed, the method of any of claims 1 to 7 is performed.

22. A computer-readable storage medium having instructions stored thereon, wherein when the instructions are executed, the method of any of claims 8 to 14 is performed.

determining a mapping mode between at least one codeword within at least one transmission period and an OAM modality —— 101

transmitting the at least one codeword within the at least one transmission period based on the mapping mode —— 102

FIG. 1

determining a number of OAM modalities corresponding to at least one codeword within at least one transmission period based on a number M of codewords within the at least one transmission period and a number N of OAM modalities —— 201

determining an OAM modality corresponding to at least one codeword within the transmission period based on an agreement-based determination method and a number of OAM modalities corresponding to the codeword —— 202

transmitting the at least one codeword within the at least one transmission period based on a modality value of the OAM modality corresponding to the at least one codeword within the at least one transmission period —— 203

FIG. 2

obtaining a modality value of the OAM modality corresponding to the at least one codeword within the at least one transmission period indicated by a base station through a signaling ⟋301a

↓

transmitting the at least one codeword within the at least one transmission period based on the modality value of the OAM modality corresponding to the at least one codeword within the at least one transmission period ⟋302a

FIG. 3a

determining a mapping mode between at least one codeword within at least one transmission period and an OAM modality ⟋301b

↓

transmitting the at least one codeword within the at least one transmission period based on the mapping mode ⟋302b

↓

indicating a modality value of the OAM modality corresponding to the at least one codeword within the at least one transmission period to a receiving device through a signaling ⟋303b

FIG. 3b

determining a mapping mode between at least one codeword within at least one transmission period and an OAM modality — 401

transmitting the at least one codeword within the at least one transmission period based on the mapping mode — 402

FIG. 4

determining a number of OAM modalities corresponding to at least one codeword within at least one transmission period based on a number M of codewords within the at least one transmission period and a number N of OAM modalities — 501

determining an OAM modality corresponding to at least one codeword within the transmission period based on an agreement-based determination method and a number of OAM modalities corresponding to the codeword — 502

receiving the at least one codeword within the at least one transmission period based on a modality value of the OAM modality corresponding to the at least one codeword within the at least one transmission period — 503

FIG. 5

obtaining a modality value of the OAM modality corresponding to the at least one codeword within each transmission period indicated by a base station through a signaling — 601a

receiving the at least one codeword within the at least one transmission period based on the modality value of the OAM modality corresponding to the at least one codeword within the at least one transmission period — 602a

FIG. 6a

determining a mapping mode between at least one codeword within at least one transmission period and an OAM modality — 601b

receiving the at least one codeword within the at least one transmission period based on the mapping mode — 602b

indicating a modality value of the OAM modality corresponding to the at least one codeword within the at least one transmission period to a sending device through a signaling — 603b

FIG. 6b

700

mapping mode determination apparatus

701

determining module

702

transmitting module

FIG. 7

800

mapping mode determination apparatus

801

determining module

802

transmitting module

FIG. 8

900

902

904 — memory

902 — processing component

904 — memory

906 — power component

920 — processor

908 — multimedia component

910 — audio component

916 — communication component

914 — sensor component

912 — I/O ingerface

FIG. 9

1000

1022 — processing component

1026 — power component

1032 — memory

1050 — network interface

1058 — network interface

FIG. 10

## INTERNATIONAL SEARCH REPORT

| | International application No. |
|---|---|
| | **PCT/CN2022/070401** |

**A.    CLASSIFICATION OF SUBJECT MATTER**

H04B 7/02(2018.01)i

According to International Patent Classification (IPC) or to both national classification and IPC

**B.    FIELDS SEARCHED**

Minimum documentation searched (classification system followed by classification symbols)

H04B; H04W; H04Q; H04L

Documentation searched other than minimum documentation to the extent that such documents are included in the fields searched

Electronic data base consulted during the international search (name of data base and, where practicable, search terms used)

WPI, EPODOC, CNKI, CNPAT, 3GPP: 轨道角动量, OAM, 码字, 映射, 关联, 对应, 模式, 模态, orbital angular momentum, codeword, map, correlate, mode

**C.    DOCUMENTS CONSIDERED TO BE RELEVANT**

| Category* | Citation of document, with indication, where appropriate, of the relevant passages | Relevant to claim No. |
|---|---|---|
| A | CN 110855329 A (TELECOMMUNICATIONS TECHNOLOGY RESEARCH INSTITUTE CO., LTD.) 28 February 2020 (2020-02-28) description, paragraphs [0160]-[0263] | 1-22 |
| A | CN 110958089 A (HUAWEI TECHNOLOGIES CO., LTD.) 03 April 2020 (2020-04-03) entire document | 1-22 |
| A | CN 111435846 A (TELECOMMUNICATIONS TECHNOLOGY RESEARCH INSTITUTE CO., LTD.) 21 July 2020 (2020-07-21) entire document | 1-22 |
| A | WO 2021093321 A1 (HUAWEI TECHNOLOGIES CO., LTD.) 20 May 2021 (2021-05-20) entire document | 1-22 |
| A | US 2019020434 A1 (PANASONIC INTELLECTUAL PROPERTY MANAGEMENT CO., LTD.) 17 January 2019 (2019-01-17) entire document | 1-22 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 September 2022** | **26 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/070401**

| Patent document cited in search report | | | Publication date (day/month/year) | Patent family member(s) | | | Publication date (day/month/year) |
|---|---|---|---|---|---|---|---|
| CN | 110855329 | A | 28 February 2020 | TW | 202010283 | A | 01 March 2020 |
| | | | | WO | 2020038082 | A1 | 27 February 2020 |
| CN | 110958089 | A | 03 April 2020 | WO | 2020063576 | A1 | 02 April 2020 |
| | | | | US | 2021227560 | A1 | 22 July 2021 |
| | | | | EP | 3849119 | A1 | 14 July 2021 |
| CN | 111435846 | A | 21 July 2020 | | None | | |
| WO | 2021093321 | A1 | 20 May 2021 | CN | 112910511 | A | 04 June 2021 |
| US | 2019020434 | A1 | 17 January 2019 | WO | 2017125968 | A1 | 27 July 2017 |
| | | | | JP | 2017130792 | A | 27 July 2017 |
| | | | | EP | 3407514 | A1 | 28 November 2018 |

Form PCT/ISA/210 (patent family annex) (January 2015)